# FASCICULE DE BREVET EUROPEEN

(11) **EP 1 990 376 B1**
(45) Date de publication et mention de la délivrance du brevet: **20.04.2011**
(21) Numéro de dépôt: 07290603.5
(22) Date de dépôt: 11.05.2007
(51) Int. Cl.: C09C 1/02, C09C 3/10

(54) **Procédé de broyage en millieu aqueux de matières minérales et de liants mettant en oeuvre une émulsion inverse d'un polymère de l'acrylamide avec un monomère acrylique**
Mahlverfahren für mineralische Materialien und Bindemittel in einem wässrigen Medium unter Einsatz einer inversen Emulsion aus einem Acrylamidpolymer mit einem Acrylmonomer
Procedure for the grinding of mineral materials and binders in an aqueous medium implementing a reverse emulsion of an acrylamide polymer with an acrylic monomer

(43) Date de publication de la demande: 12.11.2008
(73) Titulaire: OMYA DEVELOPMENT AG, 4665 Oftringen (CH)
(72) Inventeur: Gane, Patrick, 4852 Rothrist (CH); Schoelkopf, Joachim, 8956 Killwangen (CH); Hunziker, Philipp, 3007 Berne (CH)
(74) Mandataire: Richebourg, Michel François

(56) Documents cités:
- WO-A-2006/008657
- WO-A-2006/016036
- US-A- 6 136 305

## Description

L'invention concerne le domaine général du broyage en milieu aqueux de matières minérales en présence de liants.

Les particules minérales et les liants polymères sont 2 composants essentiels qui entrent dans la fabrication de nombreux matériaux, tels que par exemple les plastiques. Les particules minérales, tel que le carbonate de calcium, apportent notamment des propriétés mécaniques et optiques au niveau de la pièce finale ; quant aux liants, en général sous forme d'émulsions stabilisées par des tensio-actifs, ils confèrent la cohésion nécessaire à l'ensemble des constituants du matériau final.

Depuis une dizaine d'années, on a développé le concept de particules qui, sous la forme d'un produit unique, apportent à la fois les propriétés de la matière pigmentaire et du liant : on parle à ce titre de "particules pigmentaires auto-liantes". De tels produits sont obtenus par broyage en milieu aqueux de la matière minérale en présence du liant polymérique. Ce procédé conduit à des particules constituées à la fois du liant et de la matière pigmentaire de départ : le liant et la matière minérale se retrouvent intimement liés au sein de ces particules pigmentaires auto-liantes. La cohésion de telles particules est notamment améliorée par rapport à la cohésion d'un simple mélange entre la matière pigmentaire et le liant, comme illustré dans le document WO 2006 / 008657 qui sera discuté plus en détails dans la suite de la présente Demande.

Aussi, les procédés concernés par la présente Demande sont-ils des procédés mettant en oeuvre au moins une étape de broyage en milieu aqueux d'au moins une matière minérale et d'au moins un liant polymérique. Des étapes éventuelles de dispersion, de concentration et de séchage peuvent intervenir par la suite.

Ce type de procédé pose 2 problèmes majeurs à l'homme du métier. Le premier d'entre eux est lié au phénomène général de sédimentation des particules pigmentaires auto-liantes, qui sont en suspension dans l'eau. L'homme du métier recherche alors à améliorer la stabilité des suspensions aqueuses de ces particules pigmentaires auto-liantes, de manière à pouvoir stocker ou transporter ces suspensions, éventuellement sur de longues périodes : il cherche à réduire le phénomène de sédimentation. Deuxièmement, dans la mesure où des liants polymériques sont présents pendant l'étape de broyage en milieu aqueux, et comme ces liants se présentent sous la forme d'émulsions stabilisées par des tensio-actifs, lesdits tensio-actifs se retrouvent soumis à de fortes contraintes mécaniques pendant l'opération de broyage : on observe la formation de mousse. Cette mousse présente l'inconvénient d'altérer au final certaines propriétés (notamment optiques) des compositions fabriquées à partir des suspensions aqueuses de particules pigmentaires auto-liantes. De plus, la formation de mousse engendre des contraintes industrielles, notamment au niveau du transfert des suspensions de particules pigmentaires auto-liantes vers les cuves de stockage.

L'art antérieur relatif aux procédés de fabrication de particules pigmentaires auto-liantes en suspension aqueuse va désormais être discuté, de manière à dégager les solutions proposées à l'homme du métier pour résoudre ce double problème de mousse et de sédimentation des suspensions obtenues.

Le document WO 2005 / 111153 décrit un procédé de fabrication de particules en suspension aqueuse par broyage de charges pigmentaires avec des liants polymériques et ce, en présence d'agents dispersants tels que des polyacrylates. Les particules ainsi obtenues peuvent alors être mises en oeuvre dans la fabrication de peintures et de sauces de couchage. Ce document ne renseigne toutefois aucunement l'homme du métier quant aux éventuelles solutions apportées aux problèmes de sédimentation et de mousse pour les suspensions aqueuses obtenues, dans la mesure où il ne fait même pas état de ces 2 inconvénients.

Le document WO 93 / 11183 décrit un procédé de fabrication d'une suspension aqueuse de particules constituées d'un matériau pigmentaire et d'un liant polymérique, par mélange mais aussi broyage (page 33, lignes 33-34) en milieu aqueux. La caractéristique de ce procédé réside dans la régulation du potentiel Zêta de la suspension initiale de matériau pigmentaire, notamment au moyen d'un dispersant permettant d'ajuster le potentiel de surface de la charge minérale à une valeur comprise entre 0 et - 50 mV. On obtient ainsi une dispersion stable de particules pigmentaires auto-liantes qui peuvent entrer dans la composition de différents revêtements comme des peintures.

D'une part, ce document souligne la possibilité de mettre en oeuvre dans le procédé qu'il décrit des épaississants, notamment cellulosiques ou acryliques en émulsion directe (et éventuellement acryliques associatifs). L'homme du métier sait parfaitement que le rôle joué par ces épaississants est de limiter le phénomène de sédimentation des particules, notamment par augmentation de la viscosité du milieu. Ces solutions à base d'épaississants cellulosiques ou acryliques en émulsion directe sont bien connues de l'homme du métier, au sens où elles ont été initialement développées pour stabiliser des suspensions aqueuses de matières minérales "classiques" (c'est-à-dire exemptes de liants polymériques et non obtenues par le procédé selon la présente invention). Le document CA 2 081 831 publié en 1993 décrivait déjà la mise en oeuvre de tels produits pour stabiliser une suspension aqueuse de carbonate de calcium, et notamment l'utilisation de dérivés de la cellulose (comme la carboxyméthyl cellulose), d'épaississants acryliques (qui peuvent être associatifs) et même de la gomme xanthane.

Quant au problème de mousse, la solution proposée dans les exemples de ce document consiste en la mise en oeuvre d'agents antimousse, tel que le Nopco^{™} NXZ commercialisé par la société COGNIS^{™} et le Defoamer^{™} 643 autrefois commercialisé par la société RHONE POULENC^{™}, ces 2 produits étant constitués d'huiles de coupes pétrolières. De tels produits sont largement utilisés dans des procédés de fabrication de suspensions aqueuses de matières minérales "classiques" (selon l'expression précédemment employée), au même titre que des produits sililés ou des silicones. A titre d'exemple, le document JP 53 053598 de 1978 décrivait déjà la mise en oeuvre de silicones pour réduire la présence de mousse dans une suspension aqueuse de carbonate de calcium.

A la différence des 2 documents précédents qui mettent en oeuvre un agent dispersant avant et / ou pendant l'étape de broyage, le document WO 2006 / 016036 décrit un procédé de fabrication d'une suspension de matières minérales dans l'eau, par broyage en présence de liants pour peintures, puis introduction d'un agent dispersant. Ce document avance pour les suspensions obtenues des valeurs stables pour la viscosité Brookfield^{™} à 100 tours / minute et ce, pendant 8 jours. D'une part, il ne met pas en oeuvre de test qui permette de quantifier directement le phénomène de sédimentation des particules en suspension aqueuse. D'autre part, il n'indique aucun caractère de stabilité sur des périodes supérieures à 8 jours, et notamment sur des périodes de l'ordre de 1 mois qui sont celles visées dans la présente Demande en terme d'effet anti-sédimentation. Enfin, il ne renseigne pas l'homme du métier quant à une solution éventuelle pour palier à la formation de la mousse.

Parallèlement, le document WO 2006 / 008657 décrit un procédé de préparation de particules pigmentaires auto-liantes par broyage dans l'eau d'une matière pigmentaire et d'un liant pour papier, un agent dispersant étant dans une aspect de l'invention ensuite introduit dans la suspension résultante. Les exemples 4 et 5 révèlent la mise en oeuvre conjointe d'un agent dispersant et d'un agent de mouillage, tous deux en émulsion directe, en vue d'obtenir la stabilisation de la viscosité Brookfield^{™} à 100 tours / minute sur une durée de 14 jours : rien n'est avancé en terme d'effet anti-sédimentation, et aucune mesure n'a été faite sur des périodes de l'ordre de 1 mois. Enfin, ce document ne contient aucun enseignement sur la manière de traiter les problèmes de mousse lorsqu'on réalise l'opération de broyage de la matière pigmentaire et des liants en milieu aqueux.

Aussi, en vue de résoudre le double problème de la formation de mousse et de sédimentation dans des suspensions aqueuses de particules pigmentaires auto-liantes, obtenues par broyage en milieu aqueux d'au moins une matière minérale et d'au moins un liant, l'état de la technique enseigne à l'homme du métier de mettre en oeuvre 2 solutions distinctes qui consistent respectivement en :
- l'utilisation d'agents antimousse bien connus qui sont des huiles de coupes pétrolières, des produits sililés et des silicones,
- et la mise en oeuvre d'épaississants cellulosiques ou acryliques (éventuellement associatifs) en émulsion directe ou de gomme xanthane,
ces 2 solutions étant notamment déjà connues et décrites dans des procédés de fabrication de suspensions aqueuses de matières minérales, par broyage et / ou dispersion (mais sans liant polymère).

Or, poursuivant ses recherches dans ce domaine, la Demanderesse a mis au point un procédé de préparation de particules pigmentaires auto-liantes, dans laquelle une émulsion inverse formée d'une dispersion dans une phase huileuse de particules d'eau et d'au moins un polymère de l'acrylamide avec un monomère acrylique intervient à un point précis dans le procédé, ce dernier agissant comme agent anti-sédimentation et réducteur de mousse.

De manière avantageuse, la présence de mousse et le phénomène de sédimentation sur une période au moins égale à un mois sont largement réduits par rapport à la même suspension ne contenant pas ladite émulsion inverse. De manière tout à fait avantageuse, et à partir d'un produit unique qui est l'émulsion inverse précédemment décrite, on obtient des résultats au moins équivalents en terme d'effets antimousse et antisédimentation à ceux obtenus avec les solutions de l'art antérieur qui consistent en la combinaison de 2 produits (1 agent antimousse et 1 agent antisédimentation) : ceci représente à la fois un progrès technique et une grande simplification pour l'utilisateur final qui ne doit plus manipuler qu'un seul produit.

Comme indiqué auparavant, l'état de la technique relatif aux procédés de broyage en milieu aqueux d'au moins une matière minérale et d'au moins un liant ne divulguait ni ne suggérait une telle solution consistant en un produit unique : au contraire, pour palier aux problèmes de mousse et de sédimentation dans les suspensions de particules pigmentaires auto-liantes obtenues, il enseignait la mise en oeuvre conjointe d'un épaississant cellulosique ou acrylique (éventuellement associatif) ou de la gomme xanthane, et d'un agent antimousse sous la forme d'un mélange d'huiles à base de coupes pétrolières, d'un produit sililé ou à base de silicones.

La Demanderesse reconnaît que les émulsions inverses particulières dont l'utilisation est revendiquée dans la présente Demande sont déjà connues en tant que telles et ce, depuis de nombreuses années : ainsi, le document GB 841 127 publié en 1960 décrivait-il déjà un procédé de polymérisation en émulsion inverse de l'acide acrylique et de l'acrylamide. De telles émulsions ont peu à peu trouvé des applications, notamment comme agents épaississants, dans des domaines techniques éloignés de celui visé par la présente Demande tels que la cosmétique, la pharmacologie ou encore la détergence. Ainsi, le document US 6 136 305 décrit-il une émulsion inverse d'un copolymère de l'acrylamide, de l'acide acrylique et d'un autre monomère polyfonctionnel, mis en oeuvre comme épaississant dans des applications cosmétiques.

Aussi, la Demanderesse a su identifier, dans des domaines techniques très éloignés de celui de la présente invention, la solution qui lui permettrait de résoudre le problème technique qui lui était posé. Sans vouloir être liée à une quelconque théorie, la Demanderesse pense que la mise en oeuvre des émulsions inverses selon l'invention permet de réduire fortement la présence de mousse à partir des huiles qui composent la phase continue de ladite émulsion inverse, tout en résolvant le problème de sédimentation au moyen du polymère de l'acrylamide avec un monomère acrylique qui, avec l'eau, constitue la phase dispersée de ladite émulsion inverse.

L'objet de l'invention consiste donc en un procédé de préparation de particules pigmentaires auto-liantes, sèches ou en suspension ou dispersion aqueuses, comprenant les étapes suivantes :
a) former une ou plusieurs suspensions aqueuses d'au moins une matière pigmentaire et la ou les introduire dans un broyeur en vue de l'étape c);
b) former ou prendre une ou plusieurs solutions ou suspensions ou émulsions aqueuses d'au moins un liant et la ou les introduire dans un broyeur en vue de l'étape c), et / ou former ou prendre un ou plusieurs liants sec et le ou les introduire dans un broyeur au vue de l'étape c);
c) co-broyer la ou les suspensions aqueuses obtenues à l'étape a) avec la ou les solutions ou suspensions ou émulsions aqueuses et/ou le ou les liants sec obtenues à l'étape b) de manière à obtenir une suspension aqueuse de particules pigmentaires auto-liantes;
d) éventuellement co-broyer la suspension aqueuse obtenue à l'étape c) avec une ou plusieurs solutions ou suspensions ou émulsions aqueuses d'au moins un liant;
e) éventuellement augmenter la concentration de la suspension aqueuse obtenue à l'étape c) ou d) par concentration thermique et/ou mécanique;
f) éventuellement disperser la suspension aqueuse obtenue à l'étape e) par la mise en oeuvre d'au moins un agent dispersant;
g) éventuellement sécher la suspension aqueuse obtenue à l'étape c) ou à l'étape d) ou à l'étape e) ou à l'étape f);
et caractérisé en ce qu'une émulsion inverse formée d'une dispersion dans une phase huileuse de particules d'eau et d'au moins un polymère de l'acrylamide avec un monomère acrylique est introduite dans le procédé
- suite à l'étape c) et toute éventuelle étape d),
- préférentiellement suite à la réalisation de l'étape e),
- plus préférentiellement suite à la réalisation de l'étape f)
- et encore plus préférentiellement avant toute éventuelle étape g).

L'objet de l'invention consiste également en un procédé de préparation de particules pigmentaires auto-liantes, sèches ou en suspension ou dispersion aqueuses, comprenant les étapes suivantes :
a) former une ou plusieurs suspensions aqueuses d'au moins une matière pigmentaire et la ou les introduire dans un broyeur en vue de l'étape c);
b) former ou prendre une ou plusieurs solutions ou suspensions ou émulsions aqueuses d'au moins un liant et la ou les introduire dans un broyeur en vue de l'étape c), et / ou former ou prendre un ou plusieurs liants sec et le ou les introduire dans un broyeur au vue de l'étape c);
c) co-broyer la ou les suspensions aqueuses obtenues à l'étape a) avec la ou les solutions ou suspensions ou émulsions aqueuses et/ou le ou les liants sec obtenues à l'étape b) de manière à obtenir une suspension aqueuse de particules pigmentaires auto-liantes;
d) éventuellement co-broyer la suspension aqueuse obtenue à l'étape c) avec une ou plusieurs solutions ou suspensions ou émulsions aqueuses d'au moins un liant;
e) éventuellement augmenter la concentration de la suspension aqueuse obtenue à l'étape c) ou d) par concentration thermique et/ou mécanique;
f) éventuellement disperser la suspension aqueuse obtenue à l'étape e) par la mise en oeuvre d'au moins un agent dispersant;
g) éventuellement sécher la suspension aqueuse obtenue à l'étape c) ou à l'étape d) ou à l'étape e) ou à l'étape f);
et caractérisé en ce qu'une émulsion inverse formée d'une dispersion dans une phase huileuse de particules d'eau et d'au moins un polymère de l'acrylamide avec un monomère acrylique est introduite dans le procédé
- avant et / ou pendant l'étape c).

Le terme liant utilisé dans la présente demande fait référence à tout produit naturel ou synthétique de nature organique, possédant des propriétés liantes. Ces propriétés liantes, qui augmentent les forces de cohésion interparticulaires du minéral de départ, sont déterminées selon la méthode décrite dans l'exemple 1 du document WO 2006 / 008657.

On notera que de manière préférentielle, ladite émulsion inverse est mise en oeuvre après l'étape c).

Dans une variante préférée du procédé selon l'invention comprenant l'étape éventuelle d), ladite émulsion inverse est mise en oeuvre après l'étape d).

Enfin, une autre variante préférée consiste en ce que ladite émulsion inverse est mise en oeuvre
- préférentiellement suite à la réalisation de l'étape e),
- plus préférentiellement suite à la réalisation de l'étape f)
- et encore plus préférentiellement avant toute éventuelle étape g)

Les diverses formes du procédé selon l'invention seront facilement envisageables par l'homme du métier. Il comprendra qu'il pourrait, par exemple, mettre en oeuvre le procédé de l'invention en effectuant au moins les étapes a), b), c) et g) afin d'obtenir lesdites particules pigmentaires auto-liantes sous forme sèches avant de reformer une suspension desdites particules pigmentaires auto-liantes et finalement d'introduire ladite émulsion inverse.

Ce procédé est aussi caractérisé en ce que ladite émulsion inverse contient, par rapport à son poids total (la somme des pourcentages étant égale à 100 %) :
- de 10 à 70 % en poids d'eau,
- de 10 à 60 % en poids d'huile,
- de 10 à 40 % en poids d'au moins un polymère de l'acrylamide avec un monomère acrylique,
- de 1 à 5 % en poids de tensio-actifs.

Ce procédé est aussi caractérisé en ce que le polymère de l'acrylamide avec un monomère acrylique est éventuellement totalement ou partiellement neutralisé par un ou plusieurs agents de neutralisation, choisis préférentiellement parmi l'ammoniaque, les hydroxydes de sodium, de potassium et leurs mélanges, l'agent de neutralisation étant très préférentiellement l'ammoniaque.

Ce procédé est aussi caractérisé en ce que le polymère de l'acrylamide avec un monomère acrylique possède un poids moléculaire compris entre 10⁵ et 10⁷ g/mole.

Ce procédé est aussi caractérisé en ce que le ratio en poids acrylamide : monomère acrylique est compris entre 10 : 90 et 90 : 10, préférentiellement entre 20 : 80 et 80 : 20.

Ce procédé est aussi caractérisé en ce que le monomère acrylique est choisi parmi l'acide acrylique, l'acide méthacrylique et leurs mélanges, et est préférentiellement l'acide acrylique.

Ce procédé est aussi caractérisé en ce que la phase huileuse est composé d'huiles qui sont des mélanges aromatiques et / ou d'alcanes ayant de 6 à 20 atomes de carbone, préférentiellement de 12 à 18 atomes de carbone.

Ce procédé est aussi caractérisé en ce que ledit procédé met en oeuvre de 300 à 3 000 ppm de ladite émulsion inverse, par rapport au poids sec de matière pigmentaire et de liant polymérique.

Ce procédé est aussi caractérisé en ce que la matière pigmentaire est choisie parmi les oxydes métalliques, les hydroxydes, les sulfites, les silicates et les carbonates, telles que le carbonate de calcium, les dolomies, le kaolin le talc, le gypse, le dioxyde de titane, le blanc satin ou le trihydroxyde d'aluminium et leurs mélanges.

De manière préférentielle, la matière pigmentaire est un carbonate choisie parmi le carbonate de calcium synthétique ou naturel et leurs mélanges. Elle est encore plus préférentiellement un carbonate de calcium naturel, telles que la craie, le marbre, la calcite, le calcaire, ou leurs mélanges.

Le procédé selon l'invention est aussi caractérisé en ce que la ou les suspensions aqueuses de matières pigmentaires formées à l'étape a) contiennent de 1 % à 80 % en poids sec de matières pigmentaires, et préférentiellement contiennent de 15 % à 60 % en poids sec de matières pigmentaires.

Ce procédé est aussi caractérisé en ce que ledit procédé met en oeuvre une quantité en poids sec de liant polymérique inférieure à 20 %, préférentiellement à 10 %, très préférentiellement à 5 % du poids sec de matière pigmentaire.

Ce procédé est aussi caractérisé en ce que le liant est choisi parmi les liants semi-cristallins, les liants à base d'alcool polyvinylique, de l'acétate de polyvinyle, de l'amidon, de la caséine, des protéines, de la carboxyméthylcellulose (CMC), de l'éthylhydroxyéthylcellulose (EHEC), des copolymères d'esters acryliques, et de leurs mélanges.

De manière préférentielle, le ou les liants sont des latex semi-cristallins, et plus préférentiellement sont des polyéthylène ou des copolymères sous forme neutralisée du polyéthylène avec d'autres unités monomères tels que l'acide acrylique ou d'autres monomères ou leurs mélanges.

Le procédé selon l'invention est aussi caractérisé en ce que le ou les liants de l'étape b) sont sous forme d'une ou plusieurs solutions ou d'une ou plusieurs suspensions ou d'une ou plusieurs émulsions aqueuses ou sous forme de granulés secs.

De manière préférentielle, ce procédé est aussi caractérisé en ce que le ou les liants de l'étape b) sont sous forme d'une ou plusieurs solutions ou d'une ou plusieurs suspensions ou d'une ou plusieurs émulsions aqueuses.

Lors de la mise en oeuvre du ou des liants de l'étape b) sous forme d'une ou plusieurs solutions ou d'une ou plusieurs suspensions ou d'une ou plusieurs émulsions aqueuses, le procédé selon l'invention est aussi caractérisé en ce que la ou les solutions ou suspensions ou émulsions aqueuses d'au moins un liant formées à l'étape b) contiennent de 1 % à 60 % en poids d'au moins un liant, et plus préférentiellement de 5 % à 50 % en poids d'au moins un liant.

Lors de la mise en oeuvre du ou des liants de l'étape b) sous forme d'émulsion, le procédé selon l'invention est aussi caractérisé en ce que le ou les liants sont des émulsions de cires de polyéthylène ou des copolymères sous forme neutralisée du polyéthylène avec d'autres unités monomères tels que l'acide acrylique ou d'autres monomères, des émulsions latex de copolymères d'esters acryliques, ou leurs mélanges.

Le procédé selon l'invention est aussi caractérisé en ce que la suspension formée à l'étape c) présente un rapport matières pigmentaires : liants contenus dans la suspension obtenue compris entre 99 : 1 et 1 : 99, et préférentiellement compris entre 90 : 10 et 10 : 90 exprimé en parts de poids.

Ce procédé est aussi caractérisé en ce que le procédé est adapté afin d'obtenir, à l'étape c), des particules pigmentaires auto-liantes avec un diamètre moyen de particules compris entre 0,1 µm et 10 µm, et préferentiellement entre 0,1 µm et 2 µm mesuré au moyen d'un granulomètre MasterSizer™ S commercialisé par la société MALVERN (avec la présentation 3PHD).

Ce procédé est aussi caractérisé en ce qu'aucun dispersant n'est mis en oeuvre avant et / ou pendant l'étape c) de broyage.

Ce procédé est aussi caractérisé en ce qu'on met aussi en oeuvre un agent dispersant avant et / ou pendant l'étape c) de broyage.

De manière préférentielle le procédé de l'invention est caractérisé en ce qu'aucun dispersant n'est mis en oeuvre lors de l'étape c).

Ce procédé est aussi caractérisé en ce qu'on met en oeuvre un agent dispersant lors de l'étape f).

Lors de la mise en oeuvre de dispersant dans le procédé selon l'invention, il sera noté que ce dernier peut éventuellement aussi agir en tant qu'agent de mouillabilité, c'est à dire qu'il agit afin de rendre partiellement ou entièrement hydrophile une surface partiellement ou entièrement hydrophobe.

De manière préférentielle, le ou les agents dispersants sont choisis parmi les composés organiques bien connus de l'homme du métier donnant une stabilisation stérique ou électrostatique.

De manière préférentielle, lors de la mise en oeuvre d'au moins un agent dispersant lors de l'étape f), on ajoute de 0,01 % à 5 %, préférentiellement de 0,01 % à 2 % en poids d'agent dispersant lors de l'étape f).

Le procédé selon l'invention est aussi caractérisé en ce que l'étape g) est effectuée afin d'obtenir des particules pigmentaires auto-liantes sèches.

Un autre objet de la présente invention sont les particules pigmentaires auto-liantes sèches obtenue par le procédé selon l'invention mettant en oeuvre l'étape g).

Ces particules pigmentaires auto-liantes sèches sont aussi caractérisées en ce qu'elles présentent un diamètre moyen de particules compris entre 5 µm et 100 µm, et préférentiellement compris entre 10 µm et 30 µm tel que mesuré à partir d'un granulomètre MasterSizer™ S commercialisé par la société MALVERN (avec la présentation 3PHD).

Ces particules pigmentaires auto-liantes sèches sont aussi caractérisées en ce qu'elles sont auto-liantes telles que définies dans l'exemple 1 du WO 2006/008657.

Ces particules pigmentaires auto-liantes sèches sont aussi caractérisées en ce que lorsqu'elles sont mises en suspension aqueuse, elles sédimentent moins vite que des particules pigmentaires auto-liantes formé par un même procédé ne mettant pas en oeuvre ladite émulsion inverse.

Un autre objet de la présente invention est la suspension aqueuse de particules pigmentaires auto-liantes, caractérisée en ce qu'elle est obtenue par le procédé selon l'invention.

Cette suspension aqueuse de particules pigmentaires auto-liantes est aussi caractérisée en ce que les particules pigmentaires sont auto-liantes telles que définies dans l'exemple 1 du WO 2006/008657.

Cette suspension aqueuse de particules pigmentaires auto-liantes est aussi caractérisée en ce que les particules pigmentaires auto-liantes sédimentent moins vite qu'une suspension de particules pigmentaires auto-liantes formées par un même procédé ne mettant pas en oeuvre ladite émulsion inverse.

Cette suspension aqueuse de particules pigmentaires auto-liantes est aussi caractérisée en ce qu'elle contient entre 5 % et 80 % en poids de matières pigmentaires, entre 1 % et 30 % en poids de liants, entre 0.03 % et 0.3 % en poids d'émulsion inverse, et entre 19 % et 94 % en poids d'eau, et préférentiellement, en ce qu'elle contient entre 20 % et 40 % en poids de matières pigmentaires, entre 5 % et 20 % en poids de liants, entre 0.03 % et 0.3 % de en poids d'émulsion inverse, et entre 40 % et 75 % en poids d'eau.

### EXEMPLES

### Exemple 1

Cet exemple illustre l'utilisation, dans un procédé de fabrication d'une suspension aqueuse de particules pigmentaires auto-liantes à base de carbonate de calcium et d'un liant styrène-butadiène

### Procédé de fabrication des particules pigmentaires auto-liantes

Dans un premier temps, on commence par préparer une dispersion aqueuse concentrée de particules pigmentaires auto-liantes, selon le mode opératoire suivant.

Dans un broyeur de type Dyno-Mill^{™} avec un cylindre fixe, un impulseur tournant et dont le corps broyant est constitué de billes de verre d'un diamètre compris entre 1 et 1,4 mm, on broye, en milieu aqueux :
- du carbonate de calcium qui est un marbre de Norvège, dont le diamètre médian (mesuré par un Sedigraph^{™} 5100 commercialisé par la société MICROMERITICS^{™}) est égal à 0,8 µm,
- un liant styrène-acrylique commercialisé par la société BASF^{™} sous le nom de Acronal^{™} S728,
- un autre liant qui est un copolymère de l'éthylène et de l'acide acrylique et commercialisé par la société BASF^{™} sous le nom de Polygen^{™} WE4.

Les quantités d'eau, de carbonate de calcium et des 2 liants sont ajustées de telle manière à ce que :
- la teneur en poids sec de carbonate de calcium et des 2 liants soit égale à 20 % du poids total de la suspension obtenue après le broyage,
- le rapport en poids sec carbonate de calcium / Acronal^{™} S728 / Polygen^{™} WE4 soit égal à 100 / 9,5 / 0,5.

La densité du corps broyant est égale à 1,8 g/cm³.

La chambre de broyage présente un volume égal à 600 cm³.

La vitesse circonférentielle du broyeur est égale à 10m.s⁻¹.

Après broyage, on obtient donc une suspension aqueuse de particules pigmentaires auto-liantes dont le diamètre médian (mesuré par un Sedigraph^{™} 5100 commercialisé par la société MICROMERITICS^{™}) est égal à 0,5 µm.

Cette suspension est ensuite concentrée à une teneur en poids sec de carbonate de calcium et des 2 liants égale à 40 % de son poids total, au moyen d'une centrifugeuse de type Rouan XYX tournant à 5500 tours par minute.

La suspension obtenue est enfin dispersée, avec introduction de 0,5 % en poids sec d'un polymère de l'acide acrylique, de l'acide méthacrylique, du styrène et de l'acrylate de butyle et de 0,1 % en poids sec d'un polymère de l'acide acrylique et de l'anhydride maléique (ces quantités étant relatives au poids sec de carbonate de calcium et des 2 liants).

A l'exception de l'essai n° 1 qui est un témoin, on ajoute ensuite pour chacun des essais n° 2 à 15 un produit selon l'invention ou un produit selon l'art antérieur ou le mélange de 2 produits de l'art antérieur. Les produits sont repérés par des lettres dont la signification est donnée ci-dessous. Les essais n° 2 à 9 mettent en oeuvre 1000 ppm d'un antimousse ou d'un agent antisédimentation de l'art antérieur. Les essais n° 10 à 14 mettent en oeuvre 1000 ppm d'un antimousse et 1000 ppm d'un agent antisédimentation de l'art antérieur. L'essai n° 15 met en oeuvre 2000 ppm de l'émulsion inverse selon l'invention.

On appelle :
- agent antisédimentation 1 de l'art antérieur, un épaississant qui est un polymère acrylique associatif de type HASE, commercialisé par la société COATEX^{™} sous le nom Thixol^{™} 53 L, noté A1 ;
- agent antisédimentation 2 de l'art antérieur, un épaississant qui est un polymère acrylique associatif de type HASE, commercialisé par la société ROHM & HAAS^{™} sous le nom Acrysol^{™} TT 945, noté A2 ;
- agent antisédimentation 3 de l'art antérieur, un épaississant qui est un polymère acrylique associatif de type ASE, commercialisé par la société COATEX^{™} sous le nom Viscoatex^{™} 46, noté A3 ;
- agent antisédimentation 4 de l'art antérieur, une hydroxyéthyl cellulose, commercialisée par la société AKZO NOBEL^{™} sous le nom Bermocoll^{™} EM 700 FQ, noté A4 ;
- agent antisédimentation 5 de l'art antérieur, une gomme xanthane, commercialisée par la société RHODIA^{™} sous le nom Rhodigel^{™}, noté A5
- agent antimousse 1 de l'art antérieur, une formulation à d'huiles minérales, commercialisée par la société NOPCO^{™} sous le nom NOPCO^{™} NXZ, noté B1 ;
- agent antimousse 2 de l'art antérieur une émulsion aqueuse directe de polydiméthyl siloxanes, commercialisée par la société RHODIA^{™} sous le nom Rhodosil^{™} 422, noté B2 ;
- agent antimousse 3 de l'art antérieur, une émulsion de silicones et d'hydrophobes, commercialisée par la société BYK^{™} sous le nom Byk^{™} 022, noté B 3 ;
- agent antimousse et antisédimentation selon l'invention une émulsion inverse qui consiste en la dispersion dans une phase huileuse d'eau et d'un polymère de l'acrylamide avec l'acide acrylique, commercialisé par la société COATEX^{™} sous le nom M1201, et notée C.

### Mesure de l'effet antisédimentation

Pour chacune des suspensions aqueuses de particules pigmentaires auto-liantes obtenues selon les essais n° 1 à 15, on prélève 1 litre de suspension immédiatement après la fabrication de celle-ci, et on l'introduit dans un bécher en verre de 5 litres.

Aux instants t=14 jours et t=28 jours, on détermine par mesure :
- la hauteur du surnageant qui est constitué d'eau,
- la hauteur du sédiment qui est constitué majoritairement de particules pigmentaires auto-liantes.

Ces 2 hauteurs sont exprimées en pourcentage de la hauteur total de la suspension aqueuse dans le bécher, et notées s₁₄ et d₁₄ respectivement pour le surnageant et le sédiment au bout de 14 jours, et s₂₈ et d₂₈ respectivement pour le surnageant et le sédiment au bout de 28 jours. Plus ces pourcentages sont élevés, plus le phénomène de sédimentation est important.

Les résultats sont indiqués dans le tableau 1.

### Mesure de l'effet antimousse

Pour chacune des suspensions aqueuses de particules pigmentaires auto-liantes obtenues selon les essais n° 1 à 15, on prélève 700 ml qui sont agités pendant 30 secondes dans un agitateur type Hamilton Beach^{™} sur position High.

Après 30 secondes de repos, la densité expérimentale p du système est déterminée par pycnométrie. L'erreur relative est de l'ordre de 5 % sur la mesure finale.

La densité des 2 liants est égale à 1,0 et celle du carbonate de calcium étant égale à 2,7. On rappelle que la teneur en poids sec de carbonate de calcium et des 2 liants est égale à 40 % du poids total de la suspension, et que le rapport en poids sec carbonate de calcium / Acronal^{™} S728 / Polygen^{™} WE4 est égal à 100 / 9,5 / 0,5

On en déduit que la densité théorique de la dispersion concentrée de particules pigmentaires auto-liantes (sans mousse) est égale à 1,299.

Plus on trouve une densité expérimentale faible, plus la présence de mousse est importante. Les résultats sont indiqués dans le tableau 1.

Le tableau 1 permet de constater tout d'abord que les agents antisédimentation de l'art antérieur permettent effectivement d'améliorer la stabilité des suspensions obtenues, mais qu'ils n'ont aucun effet antimousse ; parallèlement, les agents antimousse de l'art antérieur permettent de réduire la présence de mousse dans les suspensions, mais n'ont aucun effet sur le phénomène de sédimentation (cas des essais n° 2 à 9).

Lorsqu'on met en oeuvre un mélange constitué de 2000 ppm de ces produits (1000 ppm d'antimousse et 1000 ppm d'agent antisédimentation), la quantité de mousse diminue et la stabilité des suspensions est améliorée : cette solution représente les combinaisons de l'art antérieur (cas des essais n° 10 à 14).

Si on met enfin en oeuvre 2000 ppm de l'émulsion inverse selon l'invention (essai n° 15), on réduit dans les mêmes proportions que les combinaisons de l'art antérieur (essais n° 10 à 14) la quantité de mousse et le phénomène de sédimentation des particules en suspension.

Ces résultats démontrent donc bien que seul l'essai correspondant à l'invention permet, à travers un produit unique utilisé en même quantité que les 2 produits de l'art antérieur, de minimiser la quantité de mousse et le phénomène de sédimentation, à un niveau de performances au moins égal à celui atteint par les solutions de l'art antérieur.

**Tableau 1**

| Essai n° | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Témoin (T) Art Antérieur (AA) Invention (IN) | T | AA | AA | AA | AA | AA | AA | AA | AA | AA | AA | AA | AA | AA | IN |
| | - | A1 | A2 | A3 | A4 | A5 | B1 | B2 | B3 | A1B1 | A2B2 | A3B3 | A4B1 | A5B1 | C |
| ρ (g/cm³) | 1,087 | 1,088 | 1,089 | 1,087 | 1,087 | 1,090 | 1,195 | 1,190 | 1,187 | 1,193 | 1,188 | 1,191 | 1,194 | 1,192 | 1,192 |
| s₁₄ % | 18 | 4 | 5 | 4 | 5 | 6 | 18 | 18 | 18 | 4 | 5 | 3 | 4 | 6 | 3 |
| s₂₈ (%) | 25 | 6 | 6 | 6 | 7 | 9 | 25 | 25 | 25 | 6 | 7 | 6 | 7 | 9 | 6 |
| d₁₄ (%) | 5 | 0 | 1 | 0 | 1 | 2 | 5 | 5 | 5 | 0 | 1 | 1 | 1 | 2 | 0 |
| d₂₈ (%) | 12 | 1 | 2 | 2 | 2 | 3 | 12 | 12 | 12 | 1 | 2 | 2 | 3 | 3 | 1 |

## Revendications

1. Procédé de préparation de particules pigmentaires auto-liantes, sèches ou en suspension ou dispersion aqueuses, comprenant les étapes suivantes :
a) former une ou plusieurs suspensions aqueuses d'au moins une matière pigmentaire et la ou les introduire dans un broyeur en vue de l'étape c);
b) former ou prendre une ou plusieurs solutions ou suspensions ou émulsions aqueuses d'au moins un liant et la ou les introduire dans un broyeur en vue de l'étape c), et / ou former ou prendre un ou plusieurs liants sec et le ou les introduire dans un broyeur au vue de l'étape c);
c) co-broyer la ou les suspensions aqueuses obtenues à l'étape a) avec la ou les solutions ou suspensions ou émulsions aqueuses et/ou le ou les liants sec obtenues à étape b) de manière à obtenir une suspension aqueuse de particules pigmentaires auto-liantes;
d) éventuellement co-broyer la suspension aqueuse obtenue à l'étape c) avec une ou plusieurs solutions ou suspensions ou émulsions aqueuses d'au moins un liant;
e) éventuellement augmenter la concentration de la suspension aqueuse obtenue à l'étape c) ou d) par concentration thermique et/ou mécanique;
f) éventuellement disperser la suspension aqueuse obtenue à l'étape e) par la mise en oeuvre d'au moins un agent dispersant;
g) éventuellement sécher la suspension aqueuse obtenue à l'étape c) ou à l'étape d) ou à l'étape e) ou à l'étape f);
et **caractérisé en ce qu'**une émulsion inverse formée d'une dispersion dans une phase huileuse de particules d'eau et d'au moins un polymère de l'acrylamide avec un monomère acrylique est introduite dans le procédé
- suite à l'étape c) et toute éventuelle étape d),
- préférentiellement suite à la réalisation de l'étape e),
- plus préférentiellement suite à la réalisation de l'étape f)
- et encore plus préférentiellement avant toute éventuelle étape g).

2. Procédé de préparation de particules pigmentaires auto-liantes, sèches ou en suspension ou dispersion aqueuses, comprenant les étapes suivantes :
a) former une ou plusieurs suspensions aqueuses d'au moins une matière pigmentaire et la ou les introduire dans un broyeur en vue de l'étape c);
b) former ou prendre une ou plusieurs solutions ou suspensions ou émulsions aqueuses d'au moins un liant et la ou les introduire dans un broyeur en vue de l'étape c), et / ou former ou prendre un ou plusieurs liants secs et le ou les introduire dans un broyeur au vue de l'étape c);
c) co-broyer la ou les suspensions aqueuses obtenues à l'étape a) avec la ou les solutions ou suspensions ou émulsions aqueuses et/ou le ou les liants secs obtenus à l'étape b) de manière à obtenir une suspension aqueuse de particules pigmentaires auto-liantes;
d) éventuellement co-broyer la suspension aqueuse obtenue à l'étape c) avec une ou plusieurs solutions ou suspensions ou émulsions aqueuses d'au moins un liant;
e) éventuellement augmenter la concentration de la suspension aqueuse obtenue à l'étape c) ou d) par concentration thermique et/ou mélanique;
f) éventuellement disperser la suspension aqueuse obtenue à l'étape e) par la mise en oeuvre d'au moins un agent dispersant;
g) éventuellement sécher la suspension aqueuse obtenue à l'étape c) ou à l'étape d) ou à l'étape e) ou à l'étape f);
**et caractérisé en ce qu'**une émulsion inverse formée d'une dispersion dans une phase huileuse de particules d'eau et d'au moins un polymère de l'acrylamide avec un
- monomère acrylique est introduite dans le procédé
- avant et / ou pendant étape c).

3. Procédé selon la revendication 1 ou 2, **caractérisé en ce que** ladite émulsion inverse contient, par rapport à son poids total (la somme des pourcentages étant égale à 100 %) :
- de 10 à 70 % en poids d'eau,
- de 10 à 60 % en poids d'huile,
- de 10 à 40 % en poids d'au moins un polymère de l'acrylamide avec un monomère acrylique,
- de 1 à 5 % en poids de tensio-actifs.

4. Procédé selon l'une des revendications 1 à 3, **caractérisé en ce que** le polymère de l'acrylamide avec un monomère acrylique est éventuellement totalement ou partiellement neutralisé par un ou plusieurs agents de neutralisation, choisis préférentiellement parmi l'ammoniaque, les hydroxydes de sodium, de potassium et leurs mélanges, l'agent de neutralisation étant très préférentiellement l'ammoniaque.

5. Procédé selon l'une des revendications 1 à 4, **caractérisé en ce que** le polymère de l'acrylamide avec un monomère acrylique possède un poids moléculaire compris entre 10⁵ et 10⁷ g/mole.

6. Procédé selon l'une des revendications 1 à 5, **caractérisé en ce que** le ratio en poids acrylamide : monomère acrylique est compris entre 10 : 90 et 90 : 10, préférentiellement entre 20 : 80 et 80 : 20.

7. Procédé selon l'une des revendications 1 à 6, **caractérisé en ce que** le monomère acrylique est choisi parmi l'acide acrylique, l'acide méthacrylique et leurs mélanges, et est préférentiellement l'acide acrylique.

8. Procédé selon l'une des revendications 1 à 7, **caractérisé en ce que** la phase huileuse est composée d'huiles qui sont des mélanges aromatiques et / ou d'alcanes ayant de 6 à 20 atomes de carbone, préférentiellement de 12 à 18 atomes de carbone.

9. Procédé selon l'une des revendications 1 à 8, **caractérisé en ce que** ledit procédé met en oeuvre de 300 à 3 000 ppm de ladite émulsion inverse, par rapport au poids sec de matière pigmentaire et de liant polymérique.

10. Procédé selon l'une des revendications 1 à 9, **caractérisé en ce que** la matière pigmentaire est choisie parmi les oxydes métalliques, les hydroxydes, les sulfites, les silicates et les carbonates, tels que le carbonate de calcium, les dolomies, le kaolin le talc, le gypse, le dioxyde de titane, le blanc satin ou le trihydroxyde d'aluminium et leurs mélanges.

11. Procédé selon la revendication 10, **caractérisé en ce que** la matière pigmentaire est un carbonate choisie parmi le carbonate de calcium synthétique ou naturel et leurs mélanges, et **en ce qu'**elle est préférentiellement un carbonate de calcium naturel, tels que la craie, le marbre, la calcite, le calcaire, ou leurs mélanges.

12. Procédé selon l'une des revendications 1 à 11, **caractérisé en ce que** la ou les suspensions aqueuses de matières pigmentaires formées à l'étape a) contiennent de 1 % à 80 % en poids sec de matières pigmentaires, et préférentiellement contiennent de 15 % à 60 % en poids sec de matières pigmentaires.

13. Procédé selon l'une des revendications 1 à 12, **caractérisé en ce que** ledit procédé met en oeuvre une quantité en poids sec de liant polymérique inférieure à 20 %, préférentiellement à 10 %, très- préférentiellement à 5 % du poids sec de matière pigmentaire.

14. Procédé selon l'une des revendications 1 à 13, **caractérisé en ce que** le liant est choisi parmi les liants semi-cristallins, les liants à base d'alcool polyvinylique, de l'acétate de polyvinyle, de l'amidon, de la caséine, des protéines, de la carboxyméthylcellulose (CMC), de l'éthylhydroxyéthylcellulose (EHEC), des copolymères d'esters acryliques, et de leurs mélanges.

15. Procédé selon la revendication 14, **caractérisé en ce que** les liants semi-cristallins sont choisis préférentiellement parmi des polyéthylène ou des copolymères sous forme neutralisée du polyéthylène avec d'autres unités monomères tels que l'acide acrylique ou d'autres monomères ou leurs mélanges.

16. Procédé selon l'une des revendications 1 à 15, **caractérisé en ce que** le ou les liants de l'étape b) sont sous forme de granulés secs.

17. Procédé selon l'une des revendications 1 à 15, **caractérisé en ce que** le ou les liants de l'étape b) sont sous forme d'une ou plusieurs solutions ou d'une ou plusieurs suspensions ou d'une ou plusieurs émulsions aqueuses.

18. Procédé selon la revendication 17, **caractérisé en ce que** la ou les solutions ou suspensions ou émulsions aqueuses d'au moins un liant formées à l'étape b) contiennent de 1 % à 60 % en poids d'au moins un liant, et plus préférentiellement de 5 % à 50 % en poids d'au moins un liant.

19. Procédé selon la revendication 17 ou 18, **caractérisé en ce que** lorsque le ou les liants sont sous forme d'émulsion, ce sont des émulsions de cires de polyéthylène ou des copolymères sous forme neutralisée du polyéthylène avec d'autres unités monomères tels que l'acide acrylique ou d'autres monomères, des émulsions latex de copolymères d'esters acryliques, ou leurs mélanges.

20. Procédé selon l'une des revendications 1 à 19, **caractérisé en ce que** la suspension formée à l'étape c) est **caractérisée en ce que** le rapport matières pigmentaires : liants contenus dans la suspension obtenue est compris entre 99: 1 et 1 : 99, et préférentiellement est compris entre 90 : 10 et 10 : 90 exprimé en parts de poids.

21. Procédé selon l'une des revendications 1 à 20, **caractérisé en ce que** le procédé est adapté afin d'obtenir, à l'étape c), des particules pigmentaires auto-liantes avec un diamètre moyen de particules compris entre 0,1 µm et 10 µm, et préférentiellement entre 0,1 µm et 2 µm mesuré au moyen d'un granulomètre MasterSizer™ S commercialisé par la société MALVERN (avec la présentation 3PHD).

22. Procédé selon l'une des revendications 1 à 21, **caractérisé en ce qu'**aucun dispersant n'est mis en oeuvre avant et / ou pendant l'étape c) de broyage.

23. Procédé selon l'une des revendications 1 à 21, **caractérisé en ce qu'**on met aussi en oeuvre un agent dispersant avant et / ou pendant l'étape c) de broyage.

24. Procédé selon l'une des revendications 1 à 23, **caractérisé en ce qu'**on met en oeuvre un agent dispersant lors de l'étape f).

25. Procédé selon la revendication 23 ou 24, **caractérisé en ce que** le ou les agents dispersants sont choisis parmi les composés organiques donnant une stabilisation stérique ou électrostatique.

26. Procédé selon la revendication 24, **caractérisé en ce que** qu'on ajoute de 0,01 % à 5 %, préférentiellement de 0,01 % à 2 % en poids d'au moins un agent dispersant lors de l'étape f).

27. Procédé selon l'une des revendications 1 à 26, **caractérisé en ce que** l'étape g) est effectuée.

28. Particule pigmentaire auto-liante sèche, **caractérisée en ce qu'**elle est obtenue par le procédé selon la revendication 27.

29. Particule pigmentaire auto-liante sèche selon la revendication 28, **caractérisé en ce qu'**elle présente un diamètre moyen de particules compris entre 5 µm et 100 µm, et préférentiellement compris entre 10 µm et 30 µm tel que mesuré à partir d'un granulomètre MasterSizer™ S commercialisé par la société MALVERN (avec la présentation 3PHD).

30. Suspension aqueuse de particules pigmentaires auto-liantes, **caractérisée en ce qu'**elle est obtenue par le procédé selon l'une des revendications 1 à 26.

31. Suspension aqueuse de particules pigmentaires auto-liantes selon la revendication 30, **caractérisée en ce qu'**elle contient entre 5 % et 80 % en poids de matières pigmentaires, entre 1 % et 30 % en poids de liants, entre 0.03 % et 0.3 % en poids d'émulsion inverse, et entre 19 % et 94 % en poids d'eau, et préférentiellement, **en ce qu'**elle contient entre 20 % et 40 % en poids de matières pigmentaires, entre 5 % et 20 % en poids de liants, entre 0.03 % et 0.3 % de en poids d'émulsion inverse, et entre 40 % et 75 % en poids d'eau.

## Claims

1. A process for the preparation of self-binding pigmentary particles, dry or in aqueous suspension or dispersion, comprising the following stages:
a) forming one or more aqueous suspensions of at least one pigmentary matter and introducing it or them into a mill with a view to stage c);
b) forming or taking one or more aqueous solutions or suspensions or emulsions of at least one binder and introducing it or them in a mill with a view to stage c), and/or forming or taking one or more dry binder or binders and introducing it or them in a mill with a view to stage c);
c) co-grinding the aqueous suspension or suspensions obtained in stage a) with the aqueous solution(s) or suspension(s) or emulsion(s) and/or the dry binder or binders obtained in stage b) so as to obtain an aqueous suspension of self binding pigmentary particles;
d) optionally co-grinding the aqueous suspension obtained in stage c) with one or more aqueous solutions or suspensions or emulsions of at least one binder;
e) optionally increasing the concentration of the aqueous suspension obtained in stage c) or d) by thermal and/or mechanical concentration;
f) optionally dispersing the aqueous suspension obtained in stage e) through the use of at least one dispersing agent;
g) optionally drying the aqueous suspension obtained in stage c) or in stage d) or in stage e) or in stage f);
**and characterised in that a** reverse emulsion formed from a dispersion in an oily phase of water particles and at least one polymer of acrylamide with an acrylic monomer is introduced into the process:
- following stage c) and any optional stage d),
- preferentially following the accomplishment of stage e),
- more preferentially following the accomplishment of stage f),
- and even more preferentially before any optional stage g).

2. A process for the preparation of self-binding pigmentary particles, dry or in aqueous suspension or dispersion, comprising the following stages:
a) forming one or more aqueous suspensions of at least one pigmentary matter and introducing it or them into a mill with a view to stage c);
b) forming or taking one or more aqueous solutions or suspensions or emulsions of at least one binder and introducing it or them in a mill with a view to stage c), and/or forming or taking one or more dry binder or binders and introducing it or them in a mill with a view to stage c);
c) co-grinding the aqueous suspension or suspensions obtained in stage a) with the aqueous solutions or suspensions or emulsions and/or the dry binder or binders obtained in stage b) so as to obtain an aqueous suspension of self-binding pigmentary particles;
d) optionally co-grinding the aqueous suspension obtained in stage c) with one or more aqueous solutions or suspensions or emulsions of at least one binder;
e) optionally increasing the concentration of the aqueous suspension obtained in stage c) or d) by thermal and/or mechanical concentration;
f) optionally dispersing the aqueous suspension obtained in stage e) through the use of at least one dispersing agent;
g) optionally drying the aqueous suspension obtained in stage c) or in stage d) or in stage e) or in stage f);
**and characterised in that a** reverse emulsion formed from a dispersion in an oily phase of water particles and at least one polymer of acrylamide with an acrylic monomer is introduced into the process:
- before and/or during stage c).

3. A process according to claim 1 or 2, **characterised in that** the said reverse emulsion contains, relative to its total weight (where the sum of the percentages is equal to 100%):
- 10 to 70% by weight of water,
- 10 to 60% by weight of oil,
- 10 to 40% by weight of at least one polymer of acrylamide with an acrylic monomer,
- 1 to 5% by weight of surfactants.

4. A process according to any one of claims 1 to 3, **characterised in that** the polymer of acrylamide with an acrylic monomer is optionally totally or partially neutralised by one or more neutralisation agents, preferentially chosen from among ammonia, sodium hydroxide, potassium hydroxide and their blends, the neutralisation agent being very preferentially ammonia.

5. A process according to any one of claims 1 to 4, **characterised in that** the polymer of acrylamide with an acrylic monomer has a molecular weight of between 10⁵ and 10⁷ g/mole.

6. A process according to any one of claims 1 to 5, **characterised in that** the ratio by weight of acrylamide : acrylic monomer is between 10 : 90 and 90 : 10, and preferentially between 20 : 80 and 80 : 20.

7. A process according to any one of claims 1 to 6, **characterised in that** the acrylic monomer is chosen from among acrylic acid, methacrylic acid and their blends, and is preferentially acrylic acid.

8. A process according to any one of claims 1 to 7, **characterised in that** the oily phase consists of oils which are aromatic blends and/or blends of alkanes having 6 to 20 carbon atoms, and preferentially 12 to 18 carbon atoms.

9. A process according to any one of claims 1 to 8, **characterised in that** the said process uses 300 to 3,000 ppm of the said reverse emulsion, relative to the dry weight of pigmentary matter and of polymeric binder.

10. A process according to any one of claims 1 to 9, **characterised in that** the pigmentary matter is chosen from among metal oxides, hydroxides, sulphites, silicates and carbonates, such as calcium carbonate, the dolomites, kaolin, talc, gypsum, titanium dioxide, satin white or aluminium trihydroxide and their blends.

11. A process according to claim 10, **characterised in that** the pigmentary matter is a carbonate chosen from among synthetic or natural calcium carbonate and their blends, and **in that** it is preferentially a natural calcium carbonate, such as chalk, marble, calcite, limestone, or their blends.

12. A process according to any one of claims 1 to 11, **characterised in that** the aqueous suspension or suspensions of pigmentary matter formed in stage a) containing 1% to 80% by dry weight of pigmentary matter, and preferentially contain 15% to 60% by dry weight of pigmentary matter.

13. A process according to any one of claims 1 to 12, **characterised in that** the said process uses a quantity by dry weight of the polymeric binder less than 20%, preferentially less than 10%, and very preferentially less than 5%, of the dry weight of pigmentary matter.

14. A process according to any one of claims 1 to 13, **characterised in that** the binder is chosen from among the semi-crystalline binders, binders with a polyvinylic alcohol base, polyvinyl acetate, starch, casein, proteins, carboxymethylcellulose (CMC), ethylhydroxyethylcellulose (EHEC), copolymers of acrylic esters, and their blends.

15. A process according to claim 14, **characterised in that** the semi-crystalline binders are preferentially chosen from among polyethylene or copolymers in the neutralised form of polyethylene with other monomer units such as acrylic acid or other monomers or their blends.

16. A process according to any one of claims 1 to 15, **characterised in that** the binder or binders in stage b) are in the form of dry granulates.

17. A process according to any one of claims 1 to 15, **characterised in that** the binder or binders of stage b) are in the form of one or more aqueous solutions or suspensions or emulsions.

18. A process according to claim 17, **characterised in that** the aqueous solution(s) or suspension(s) or emulsion(s) of at least one binder formed in stage b) contain 1% to 60% by weight of at least one binder, and more preferentially 5% to 20% by weight of at least one binder.

19. A process according to claim 17 or 18, **characterised in that** when the binder or binders are in the form of emulsion, these are emulsions of polyethylene waxes or copolymers in the neutralised form of polyethylene with other monomer units such as acrylic acid or other monomers, latex emulsions of copolymers of acrylic esters, or their blends.

20. A process according to any one of claims 1 to 19, **characterised in that** the suspension formed in stage c) is **characterised in that** the ratio of pigmentary matter : binders contained in the suspension obtained is between 99 : 1 and 1 : 99, and preferentially between 90 : 10 and 10 : 90, expressed as weight proportions.

21. A process according to any one of claims 1 to 20, **characterised in that** the process is adapted in order to obtain, in stage c), self-binding pigmentary particles with an average particle diameter of between 0.1 µm and 10 µm, and preferentially of between 0.1 µm and 2 µm, measured using a MasterSizer™ S granulometer sold by the company MALVERN (with 3PHD presentation).

22. A process according to any one of claims 1 to 21, **characterised in that** no dispersing agent is used before and/or during the grinding of stage c).

23. A process according to any one of claims 1 to 21, **characterised in that** a dispersing agent is also used before and/or during the grinding of stage c).

24. A process according to any one of claims 1 to 23, **characterised in that** a dispersing agent is used in stage f).

25. A process according to claim 23 or 24, **characterised in that** the dispersing agent(s) is/are chosen from among the organic compounds giving steric or electrostatic stabilisation.

26. A process according to claim 24, **characterised in that** 0.01% to 5%, and preferentially 0.01 % to 2%, by weight of at least one dispersing agent is added in stage f).

27. A process according to any one of claims 1 to 26, **characterised in that** stage g) is implemented.

28. A dry self-binding pigmentary particle, **characterised in that** it is obtained by the process according to claim 27.

29. A dry self-binding pigmentary particle according to claim 28, **characterised in that** it has an average particle diameter of between 5 µm and 100 µm, and preferentially of between 10 µm and 30 µm, as measured using a MasterSizer™ S granulometer sold by the company MALVERN (with 3PHD presentation).

30. An aqueous suspension of self-binding pigmentary particles, **characterised in that** it is obtained by the process according to any one of claims 1 to 26.

31. An aqueous suspension of self-binding pigmentary particles according to claim 30, **characterised in that** it contains between 5% and 80% by weight of pigmentary matter, between 1% and 30% by weight of binders, between 0.03% and 0.3% by weight of reverse emulsion, and between 19% and 94% by weight of water, and preferentially **in that** it contains between 20% and 40% by weight of pigmentary matter, between 5% and 20% by weight of binders, between 0.03% and 0.3% by weight of reverse emulsion, and between 40% and 75% by weight of water.

## Patentansprüche

1. Verfahren zur Herstellung von selbstbindenden Pigmentpartikeln, trocken oder in wässriger Suspension oder Dispersion, umfassend die folgenden Stufen:
a) Bilden einer Suspension oder mehrerer Suspensionen wenigstens eines Pigmentmaterials und Einbringen von ihr oder ihnen in eine Mühle im Hinblick auf Stufe c);
b) Bilden oder Nehmen einer wässrigen Lösung oder Suspension oder Emulsion oder mehrerer wässriger Lösungen oder Suspensionen oder Emulsionen wenigstens eines Bindemittels und Einbringen von ihr oder ihnen in eine Mühle im Hinblick auf Stufe c), und/oder Bilden oder Nehmen eines trockenen Bindemittels oder mehrerer trockener Bindemittel und Einbringen von ihm oder ihnen in eine Mühle im Hinblick auf Stufe c);
c) gemeinsames Vermahlen der wässrigen Suspension oder der wässrigen Suspensionen, die in Stufe a) erhalten wurde(n), mit der wässrigen Lösung oder der Suspension oder der Emulsion oder mit den wässrigen Lösungen oder Suspensionen oder Emulsionen und/oder dem trockenen Bindemittel oder den trockenen Bindemitteln, das bzw. die in Stufe b) erhalten wurde(n), um eine wässrige Suspension von selbstbindenden Pigmentpartikeln zu erhalten;
d) gegebenenfalls gemeinsames Vermahlen der wässrigen Suspension, die in Stufe c) erhalten wurde, mit einer wässrigen Lösung oder Suspension oder Emulsion oder mehreren wässrigen Lösungen oder Suspensionen oder Emulsionen wenigstens eines Bindemittels;
e) gegebenenfalls Erhöhen der Konzentration der wässrigen Suspension, die in Stufe c) oder Stufe d) erhalten wurde, durch thermische oder mechanische Konzentration;
f) gegebenenfalls Dispergieren der wässrigen Suspension, die in Stufe e) erhalten wurde, durch die Verwendung wenigstens eines Dispergierungsmittels;
g) gegebenenfalls Trocknen der wässrigen Suspension, die in Stufe c) oder in Stufe d) oder in Stufe e) oder in Stufe f) erhalten wurde;
und **dadurch gekennzeichnet, dass** eine Umkehremulsion, die aus einer Dispersion in einer öligen Phase von Wasserpartikeln und wenigstens einem Polymer aus Acrylamid mit einem Acrylmonomer gebildet wurde, in das Verfahren eingebracht wird:
- im Anschluss an Stufe c) und jegliche optionale Stufe d),
- bevorzugt im Anschluss an die Vollendung von Stufe e),
- bevorzugter im Anschluss an die Vollendung von Stufe f),
- und noch bevorzugter vor jeglicher optionalen Stufe g).

2. Verfahren zur Herstellung von selbstbindenden Pigmentpartikeln, trocken oder in wässriger Suspension oder Dispersion, umfassend die folgenden Stufen:
a) Bilden einer Suspension oder mehrerer Suspensionen wenigstens eines Pigmentmaterials und Einbringen von ihr oder ihnen in eine Mühle im Hinblick auf Stufe c);
b) Bilden oder Nehmen einer wässrigen Lösung oder Suspension oder Emulsion oder mehrerer wässriger Lösungen oder Suspensionen oder Emulsionen wenigstens eines Bindemittels und Einbringen von ihr oder ihnen in eine Mühle im Hinblick auf Stufe c), und/oder Bilden oder Nehmen eines trockenen Bindemittels oder mehrerer trockener Bindemittel und Einbringen von ihm oder ihnen in eine Mühle im Hinblick auf Stufe c);
c) gemeinsames Vermahlen der wässrigen Suspension oder der wässrigen Suspensionen, die in Stufe a) erhalten wurde(n), mit der wässrigen Lösung oder der Suspension oder der Emulsion oder mit den wässrigen Lösungen oder Suspensionen oder Emulsionen und/oder dem trockenen Bindemittel oder den trockenen Bindemitteln, das bzw. die in Stufe b) erhalten wurde(n), um eine wässrige Suspension von selbstbindenden Pigmentpartikeln zu erhalten;
d) gegebenenfalls gemeinsames Vermahlen der wässrigen Suspension, die in Stufe c) erhalten wurde, mit einer wässrigen Lösung oder Suspension oder Emulsion oder mehreren wässrigen Lösungen oder Suspensionen oder Emulsionen wenigstens eines Bindemittels;
e) gegebenenfalls Erhöhen der Konzentration der wässrigen Suspension, die in Stufe c) oder Stufe d) erhalten wurde, durch thermische oder mechanische Konzentration;
f) gegebenenfalls Dispergieren der wässrigen Suspension, die in Stufe e) erhalten wurde, durch die Verwendung wenigstens eines Dispergierungsmittels;
g) gegebenenfalls Trocknen der wässrigen Suspension, die in Stufe c) oder in Stufe d) oder in Stufe e) oder in Stufe f) erhalten wurde;
und **dadurch gekennzeichnet, dass** eine Umkehremulsion, die aus einer Dispersion in einer öligen Phase von Wasserpartikeln und wenigstens einem Polymer aus Acrylamid mit einem Acrylmonomer gebildet wurde, in das Verfahren eingebracht wird:
- vor und/oder während Stufe c).

3. Verfahren nach Anspruch 1 oder 2, **dadurch gekennzeichnet, dass** die Umkehremulsion, bezogen auf ihr Gesamtgewicht (wobei die Summe der prozentualen Anteile 100% ergibt), enthält:
- 10 to 70 Gew.-% Wasser,
- 10 to 60 Gew.-% Öl,
- 10 to 40 Gew.-% wenigstens eines Polymers aus Acrylamid mit einem Acrylmonomer,
- 1 to 5 Gew.-% Oberflächenbehandlungsmittel.

4. Verfahren nach einem der Ansprüche 1 bis 3, **dadurch gekennzeichnet, dass** das Polymer aus Acrylamid mit einem Acrylmonomer gegebenenfalls ganz oder teilweise neutralisiert ist durch ein oder mehrere Neutralisierungsmittel, bevorzugt ausgewählt aus Ammoniak, Natriumhydroxid, Kaliumhydroxid und deren Gemischen, wobei das Neutralisierungsmittel sehr bevorzugt Ammoniak ist.

5. Verfahren nach einem der Ansprüche 1 bis 4, **dadurch gekennzeichnet, dass** das Polymer aus Acrylamid mit einem Acrylmonomer ein Molekulargewicht zwischen 10⁵ and 10⁷ g/Mol aufweist.

6. Verfahren nach einem der Ansprüche 1 bis 5, **dadurch gekennzeichnet, dass** das Gewichtsverhältnis von Acrylamid : Acrylmonomer zwischen 10 : 90 und 90 : 10 beträgt, bevorzugt zwischen 20 : 80 und 80 : 20.

7. Verfahren nach einem der Ansprüche 1 bis 6, **dadurch gekennzeichnet, dass** das Acrylmonomer ausgewählt ist aus Acrylsäure, Methacrylsäure und deren Gemischen, und bevorzugt Acrylsäure ist.

8. Verfahren nach einem der Ansprüche 1 bis 7, **dadurch gekennzeichnet, dass** die ölige Phase aus Ölen besteht, die aromatische Gemische sind und/oder Gemische von Alkanen mit 6 bis 20 Kohlenstoffatomen, und bevorzugt 12 bis 18 Kohlenstoffatomen.

9. Verfahren nach einem der Ansprüche 1 bis 8, **dadurch gekennzeichnet, dass** das Verfahren 300 bis 3.000 ppm der Umkehremulsion verwendet, bezogen auf das Trockengewicht des Pigmentmaterials und des Polymerbindemittels.

10. Verfahren nach einem der Ansprüche 1 bis 9, **dadurch gekennzeichnet, dass** das Pigmentmaterial ausgewählt ist aus Metalloxiden, -hydroxiden, -sulfiten, -silikaten und -carbonaten, wie z.B. Calciumcarbonat, den Dolomiten, Kaolin, Talk, Gips, Titandioxid, Satinweiss oder Aluminiumhydroxid und deren Gemischen.

11. Verfahren nach Anspruch 10, **dadurch gekennzeichnet, dass** das Pigmentmaterial ein Carbonat ist, das aus synthetischem oder natürlichem Calciumcarbonat und deren Gemischen ausgewählt ist, und dass es bevorzugt ein natürliches Calciumcarbonat ist, wie Kreide, Marmor, Calcit, Kalkstein oder deren Gemische.

12. Verfahren nach einem der Ansprüche 1 bis 11, **dadurch gekennzeichnet, dass** die wässrige Suspension oder die wässrigen Suspensionen des Pigmentmaterials, die in Stufe a) gebildet wurde(n), 1% bis 80% Trockengewicht des Pigmentmaterials enthält bzw. enthalten, und bevorzugt 15% bis 60% Trockengewicht des Pigmentmaterials enthält bzw. enthalten.

13. Verfahren nach einem der Ansprüche 1 bis 12, **dadurch gekennzeichnet, dass** das Verfahren eine Trockengewichtsmenge des Polymerbindemittels von weniger als 20%, bevorzugt von weniger als 10%, und sehr bevorzugt von weniger als 5% verwendet, bezogen auf das Trockengewicht des Pigmentmaterials.

14. Verfahren nach einem der Ansprüche 1 bis 13, **dadurch gekennzeichnet, dass** das das Bindemittel aus semi-kristallinen Bindemitteln, Bindemitteln auf Polyvinylalkoholbasis, Polyvinylacetat, Stärke, Kasein, Proteinen, Carboxymethylcellulose (CMC), Ethylhydroxyethylcellulose (EHEC), Copolymeren von Acrylsäureestern und deren Gemischen ausgewählt ist.

15. Verfahren nach Anspruch 14, **dadurch gekennzeichnet, dass** die semi-kristallinen Bindemittel bevorzugt aus Polyethylen oder Copolymeren in der neutralisierten Form von Polyethylen mit anderen Monomereinheiten, wie Acrylsäure, oder anderen Monomeren oder deren Gemischen ausgewählt ist.

16. Verfahren nach einem der Ansprüche 1 bis 15, **dadurch gekennzeichnet, dass** das Bindemittel oder die Bindemittel in Stufe b) in der Form von trockenen Granulaten ist bzw. sind.

17. Verfahren nach einem der Ansprüche 1 bis 15, **dadurch gekennzeichnet, dass** das Bindemittel oder die Bindemittel in Stufe b) in der Form von einer wässrigen Lösung oder Suspension oder Emulsion oder von mehreren wässrigen Lösungen oder Suspensionen oder Emulsionen ist bzw. sind.

18. Verfahren nach Anspruch 17, **dadurch gekennzeichnet, dass** die wässrige Lösung oder Suspension oder Emulsion oder die wässrigen Lösungen oder Suspensionen oder Emulsionen wenigstens eines Bindemittels, die in Stufe b) gebildet wurde(n), 1 bis 60 Gew.-% wenigstens eines Bindemittels enthält bzw. enthalten, und bevorzugter 5 bis 20 Gew.-% wenigstens eines Bindemittels.

19. Verfahren nach Anspruch 17 oder 18, **dadurch gekennzeichnet, dass** wenn das oder die Bindemittel in der Form einer Emulsion vorliegen, diese Emulsionen von Polyethylenwachsen oder von Copolymeren in der neutralisierten Form von Polyethylen mit anderen Monomereinheiten, wie Acrylsäure, oder von anderen Monomeren, Latexemulsionen von Copolymeren aus Acrylsäureestern oder deren Gemische sind.

20. Verfahren nach einem der Ansprüche 1 bis 19, **dadurch gekennzeichnet, dass** die Suspension, die in Stufe c) gebildet wurde, **dadurch gekennzeichnet ist, dass** das Verhältnis des Pigmentmaterials : Bindemitteln, die in der erhaltenen Suspension enthalten sind, zwischen 99 : 1 und 1 : 99 beträgt, und bevorzugt zwischen 90 : 10 und 10 : 90, angegeben als Gewichtsanteile.

21. Verfahren nach einem der Ansprüche 1 bis 20, **dadurch gekennzeichnet, dass** das Verfahren angepasst wird, um in Stufe c) selbstbindende Pigmentpartikel mit einem mittleren Partikeldurchmesser zwischen 0,1 µm und 10 µm, und bevorzugt zwischen 0,1 µm and 2 µm zu erhalten, gemessen durch Verwenden eines MasterSizer™ S Granulometers, verkauft durch die Firma MALVERN (mit einer 3PHD Präsentation).

22. Verfahren nach einem der Ansprüche 1 bis 21, **dadurch gekennzeichnet, dass** kein Dispergierungsmittel vor und/oder während dem Mahlen von Stufe c) verwendet wird.

23. Verfahren nach einem der Ansprüche 1 bis 21, **dadurch gekennzeichnet, dass** ein Dispergierungsmittel auch vor und/oder während dem Mahlen von Stufe c) verwendet wird.

24. Verfahren nach einem der Ansprüche 1 bis 23, **dadurch gekennzeichnet, dass** ein Dispergierungsmittel in Stufe f) verwendet wird.

25. Verfahren nach Anspruch 23 oder 24, **dadurch gekennzeichnet, dass** das oder die Dispergierungsmittel aus organischen Verbindungen, die sterische oder elektrostatische Stabilisation verleihen, ausgewählt ist bzw. sind.

26. Verfahren nach Anspruch 24, **dadurch gekennzeichnet, dass** 0,01 bis 5 Gew.-%, und bevorzugt 0,01 bis 2 Gew.-% wenigstens eines Dispergierungsmittels in Stufe f) zugegeben werden.

27. Verfahren nach einem der Ansprüche 1 bis 26, **dadurch gekennzeichnet, dass** Stufe g) implementiert wird.

28. Selbstbindender Pigmentpartikel, **dadurch gekennzeichnet, dass** er durch das Verfahren gemäss Anspruch 27 erhalten wird.

29. Selbstbindender Pigmentpartikel nach Anspruch 28, **dadurch gekennzeichnet, dass** er einen mittleren Partikeldurchmesser zwischen 5 µm und 100 µm, und bevorzugt zwischen 10 µm und 30 µm aufweist, gemessen durch Verwenden eines MasterSizer™ S Granulometers, verkauft durch die Firma MALVERN (mit einer 3PHD Präsentation).

30. Wässrige Suspension selbstbindender Pigmentpartikel, **dadurch gekennzeichnet, dass** sie durch das Verfahren gemäss einem der Ansprüche 1 bis 26 erhalten wurde.

31. Wässrige Suspension selbstbindender Pigmentpartikel nach Anspruch 30, **dadurch gekennzeichnet, dass** sie zwischen 5 und 80 Gew.-% Pigmentmaterial, zwischen 1 und 30 Gew.-% Bindemittel, zwischen 0,03 und 0,3 Gew.-% Umkehremulsion, und zwischen 19 und 94 Gew.-% Wasser enthält, und bevorzugt dadurch, dass sie zwischen 20 und 40 Gew.-% Pigmentmaterial, zwischen 5 und 20 Gew.-% Bindemittel, zwischen 0,03 und 0,3 Gew.-% Umkehremulsion, und zwischen 40 und 75 Gew.-% Wasser enthält.
